(19) Europäisches Patentamt
European Patent Office
Office européen des brevets

(11) EP 0 690 091 B1

## (12) EUROPEAN PATENT SPECIFICATION

(45) Date of publication and mention
of the grant of the patent:
**15.09.1999  Bulletin 1999/37**

(51) Int Cl.[6]: **C08J 11/10**, C08J 11/28
// C08L21:00

(21) Application number: **95301399.2**

(22) Date of filing: **03.03.1995**

(54) **Improvements in and relating to the reclaiming of natural and synthetic rubbers**

Verbesserungen an und in Bezug auf die Rückgewinnung von Natur- und Synthesekautschuken

Améliorations concernant les récupération de caoutchoucs naturels et synthétiques

(84) Designated Contracting States:
AT BE CH DE DK ES FR GB GR IE IT LI LU MC NL
PT SE

(30) Priority: **25.06.1994  MY 9401654**
**16.09.1994  EP 94306799**

(43) Date of publication of application:
**03.01.1996  Bulletin 1996/01**

(73) Proprietor: **B.C. SEKHAR SDN BHD**
**Kuala Lumpur 50250 (MY)**

(72) Inventors:
• **Sekhar, Tan Sri Dr. Balachandra Chakkinggal**
**MY-59100 Kuala Lumpur (MY)**
• **Kormer, Vitaly Abramovich**
**199057 St. Petersburg (RU)**

(74) Representative:
**Baverstock, Michael George Douglas et al**
**BOULT WADE TENNANT,**
**27 Furnival Street**
**London EC4A 1PQ (GB)**

(56) References cited:
FR-A- 885 895          GB-A- 126 397
GB-A- 443 831          US-A- 4 211 676

• DATABASE WPI Derwent Publications Ltd.,
London, GB; AN 91-367135[50] & SU-A-1 620 454
(GRITSEVICH V.F.) 15 January 1991
• INTERNATIONAL POLYMER SCIENCE AND
TECHNOLOGY, vol.7, no.6, 1980,
SHAWBURY,SHREWSBUREY, GEAT-BRITAIN
pages 59 - 61 OKAMOTO H. ET AL
'Mechanochemical Reclamation of Comminuted
Tyre Srap Using Vulcanisation Accelerators'
• DATABASE WPI Derwent Publications Ltd.,
London, GB; AN 83-715046[29] & SU-A-956 297
(YAROSL POLY.) 9 September 1982
• DATABASE WPI Derwent Publications Ltd.,
London, GB; AN 92-164956[20] & SU-A-1 666 479
(YAROSL POLY.) 30 July 1991
• "Chemie Lexikon", Prof. Dr. H. Römpp,
Franckh'sche Verlagshandlung, Stuttgart, 1962,
pp 5770, 5778, 5780

## Description

Field of the Invention

This invention concerns the reclaiming of elastomeric products such as tyres, mouldings, gloves and beltings made from natural rubber or synthetic rubber or blends thereof which were originally vulcanised by the conventional sulphur-accelerated vulcanising systems so that the reclaimed elastomeric material may be recycled.

Prior Art

Recycling of reclaimed rubber from used rubber products is well-known in the industry where some 200,000 tonnes of recycled rubber is involved. The conventional rubber recycling processes use high temperature and catalysts to digest the elastomeric material being recycled resulting in a high consumption of energy and appreciable degradation of the elastomeric material being reclaimed. Thus, such reclaimed rubber has uses which are restricted by its poor physical properties. A typical reclaimed rubber has tensile strength not more than a 5 to 6 MPa while raw natural rubber with the same compound can provide strengths of over 20 MPa. The conventional process is also labour intensive and is difficult and complicated with respect to quality management and standardisation.

The conventional rubber processes in essence consists of taking vulcanised rubber crumbs, admixing them with catalysts and subjecting the mixture to temperatures of more than 170°C for periods of more than 4 to 6 hours in a digestor. The resulting material is then subjected to mastication until it is rendered into sheet form. Such rubber products are used in small proportions as processing aids or diluents with fresh rubber compounds. The presence of recycled rubber in the mixture will adversely affect the physical and dynamic properties of the final vulcanisate.

Used tyres and other rubber articles are becoming an environmental hazard globally. There is a distinct demand for a satisfactory recycling process to address this ever increasing environmental problem. The used tyre mountains now in existence globally are a fire hazard. Many attempts and approaches have been made to assuage this environmental issue. Among these could be mentioned the use of pelletized tyre crumbs for road surfacing, the burning of such crumbs to generate energy and so on. Examples of prior art processes can be found in SU-A-1 620 454, US-A-4 211676, and Okamoto et al, "Mechanochemical Reclamation of Comminuted Tyre Scrap Using Vulcanisation Accelerators", International Polymer Science and Technology, Vol. 7, no. 6, 1980.

None of the conventional methods or approaches has succeeded in making any real progress in solving this vexing global problem.

There is required a method of effectively recycling used rubber products entailing a cost effective process which will open up or delink the crosslinks of its vulcanized network structure in used rubber crumbs without unduly degrading the backbone polymer. The more successfully reclaimed rubber maintains the original physical and dynamic characteristics of original natural and synthetic rubbers, the wider the applicability of such reclaimed rubbers in further rubber manufacturing processes.

We have now developed a process which essentially converts used rubber product preferably in the form of crumbs into elastomeric material having properties which approach that of fresh elastomers in similar compounds. This process is elegant, simple and is neither energy nor labour-intensive.

The present invention provides a process for reclaiming elastomeric material from elemental sulphur-cured elastomeric material, which does not use hexamethylene tetramine, which process comprises treating the said sulphur-cured elastomeric material which has a vulcanised network with one or more rubber accelerators from the following class (A) of accelerators:

(A) zinc salts of thiocarbamates;
together with one or more rubber accelerators from the following class (B) of accelerators:

(B) 2-mercaptobenzothiazole or derivatives thereof, thiurams, guanidines, 4,4'-dithiomorpholine and sulphenamides,
wherein said combination of accelerators initiate the delinking reaction at temperatures below 70°C and there is employed as activator for said reaction zinc oxide and stearic acid, whereby the vulcanised network is opened up or delinked to provide a curable reclaimed elastomeric material.

The present invention also provides a composition which is capable of delinking the vulcanised network of sulphur-cured elastomeric material masterbatch form, which comprises an admixture of one or more rubber accelerators from the following class (A) of accelerators:

(A) zinc salts of thiocarbamates; together with one or more rubber accelerators from the following class (B) of accelerators:

(B) 2-mercaptobenzothiazole or derivatives thereof, thiurams, guanidines, 4,4'-dithiomorpholine and sulphenamides,

zinc oxide and stearic acid, as activator, for the combination of (A) and (B) accelerators, and fresh or reclaimed vulcanised rubber, with the ratio of accelerator plus activator to rubber being in the range of 40:60 to 90:10, on a weight basis.

The present invention additionally provides the use of a composition as defined above for the delinking of the vulcanised network of sulphur-cured elastomeric material.

Our process does not use hexamine which is a hazardous chemical to handle. Instead, we have relied on chemicals already used in the conventional rubber manufacturing process.

Our discovery essentially comprises the use of a novel chemical mixture which is capable of initiating proton exchange in a controlled manner at temperatures below 70°C, preferably below 50°C, i.e. by opening up or delinking the vulcanised network of elastomer material.

Our novel chemical mixture (hereinafter "Delink") preferably comprises zinc salt of thiocarbamates, such as zinc dimethyldithiocarbamate (hereinafter "ZDMC"), and 2-mercaptobenzothiazole (hereinafter "MBT"), or derivatives thereof, in the molar ratio in the range of 1:1 to 1:12, preferably dispersed in a diol, such as diethylene glycol, and activated by stearic acid, zinc oxide and sulphur.

ZDMC may be replaced on a molecular basis by other zinc salts of dithiocarbamates such as zinc diethyldithiocarbamate (ZDEC); zinc dibutyldithiocarbamate (ZBDC) or zinc dibenzyldithiocarbamate (ZBEC).

MBT may be replaced on a molecular basis by other thiazole accelerators such as benzothiazyl disulphide (MBTS) or zinc 2-mercaptobenzothiazole (ZMBT), or by sulphenamide accelerators such as N-cyclohexyl-2-benzothiazole sulphenamide (CBS) or N-tert-butyl-2-benzothiazole sulphenamide (TBBS), or by thiuram accelerators such as tetraethylthiuram disulphide (TETD), tetramethylthiuram disulphide (TMTD) or tetrabenzylthiuram disulphide (TBETD), or by guanidines or other nitrogen-based accelerators. Some of these accelerators may be less effective than MBT.

The combination of MBT or derivatives of MBT or other accelerators and ZDMC or derivatives of ZDMC in the molecular proportion initiates the proton exchange reaction which is assisted by the presence of stearic acid and zinc oxide. The presence of a small amount of sulphur was found to aid ultimate vulcanistion but is not necessary. Similarly, the presence of diol may help in the dispersion of the powders and perhaps activates the mix but is not necessary.

This novel chemical mixture or Delink (the delinking composition hereof), when blended with tyre crumbs or other vulcanised crumbs in concentrations of preferably 6 parts Delink per 100 parts of rubber crumbs on a mill, effectively delinks the vulcanised network and renders the resulting reclaimed elastomer ready for moulding and vulcanization. The total milling period, which occurs preferably at temperatures below 50°C takes only 7 to 10 minutes. Alternatively, the Delink and tyre crumbs could be first mixed in an intermix and subsequently milled in an open mill.

We have also developed a more convenient method of handling the delinking composition (Delink), i.e. bu the masterbatch method. The Delink is first mixed with fresh or reclaimed vulcanised rubber, the ratios of Delink to rubber varying between 90:10 to 40:60. This masterbatch mixture can be mixed with vulcanised crumbs in proportions which will ensure that the ultimate ratio of Delink:rubber is 6:100. Parts are parts by weight.

Some embodiments of the invention will now be described, by way of illustration, with reference to the following Examples and Tables, and the properties of the ensuing compounds illustrate the manner in which this invention is effective in practice.

Example 1

The following materials are mixed in the given proportions:

| 1. | 2-mercapatobenzothiazol (MBT) | 20.0 |
|----|-------------------------------|------|
| 2. | Zinc dimethyldithiocarbamate (ZDMC) | 6.0 |
| 3. | Stearic acid | 2.0 |
| 4. | Zinc oxide | 2.0 |
| 5. | Sulphur | 1.5 |
| 6. | Diethylene glycol | 12.0 |

The powders are first intimately mixed with vigorous stirring and then the diethylene glycol added to render the whole Delink composition in to a smooth paste.

500g of tyre crumbs are milled in a 2 roll mil for 3 minutes and then 15g of the Delink added. After further milling for 2 minutes another 15g of the Delink is introduced. The final 2 minutes of milling are carried out at narrow nip. By this time, it is possible to sheet out the compound which is ready for vulcanization at 150°C for 15 to 30 minutes. Properties of the vulcanisates using tyre crumbs originating from Malaysia and Europe are shown in Table 1 below.

Table 1

| | CHARACTERISTICS OF VULCANISATES prepared from tyre crumbs of 100% natural rubber | | | | | |
|---|---|---|---|---|---|---|
| No. | Country of origin | | Malaysia | | Europe | |
| | Characteristics | | 1 | 2 | 3 | 4 |
| 1. | Size (mm) | | 0.1-0.5 | 0.1-0.5 | 0.1-0.5 | >1.0 |
| 2. | Delink content (parts per hundred of crumb) | | 6 | 6 | 6 | 6 |
| 3. | Vulcanisation (°C) | | 143 | 155 | 143 | 143 |
| 4. | Mooney viscosity, $M_t$ 100 | | 68 | 68 | 75 | 120 |
| 5. | Stress at 100% elongation (MPa) | | 3 | 3 | 3.5 | 3.5 |
| 6. | Tensile strength (MPa) | | 12.1 | 12.7 | 14.5 | 16 |
| 7. | Elongation at break (%) | | 350 | 350 | 375 | 400 |
| 8. | Elongation set (%) | | 15 | 15 | 15 | 12 |
| 9. | Relative concentration of chains, $V_{rel}$ x $10^4$ (mole/cm³)* | | 1.1 | 1.2 | 1.2 | 1.3 |
| 10. | High elastic component of creep, A x $10^3$ (MPa)($\sigma_o \equiv$ 0.8MPa) ** | | 0.5 | 0.5 | 0.4 | 0.4 |

* $V_{rel}$ was calculated from the Mooney-Rivlin equation:

$$V_{rel} \equiv \frac{E}{RT(\lambda - 1/\lambda^2)}$$

where
   E is strain;
   $\lambda$ is the degree of elongation;
   R is the gas constant; and
   T is temperature

** Creep was calculated as follows:

$$D(\sigma,T) = D_o(\sigma,T) + A(\sigma, T)\log_\gamma + \gamma/\eta(\sigma, T)$$

where D is strain (%), $D_o$ is the initial strain at $\gamma = 1$ min (%);
A is the rate constant of creep of high elastic strain (1/MPA);
$\eta$ is viscosity (Pa·s)

## Example 2

The Delink described in Example 1 in this case is incorporated into tyre crumbs and pelletised used gloves, again in the proportion of Delink:vulcanised crumbs at 6:100. The mastication and Delink incorporation process are as described in Example 1. the mill temperature is not allowed to exceed 70°C. The total milling time is kept below 10 minutes. Table 2 below shows the properties obtained from tyre and glove crumbs. For comparison purposes the general properties obtained from fresh rubber both with (tyre compounds) and without fillers (pure gum compounds) are shown in Table 2 below:

Table 2

| Properties obtained from scrap tyre treads and scrap gloves in comparison with compounds using fresh rubber | | | | |
|---|---|---|---|---|
| Material type | tyre scrap | scrap glove | fresh rubber (tyre compounds) | fresh rubber (gum compounds) |
| Tensile strength (MPa) | 13 | 14.5 | 18-21 | 21-23 |
| Elongation (%) | 300 | 900 | 350-500 | 700-800 |
| Elongation set (%) | 10 | 15 | - | - |
| Relative concentration of chains, $V_{rel} \times 10^3$ (mole/cm$^3$) | 1.4 | 0.6 | - | - |

<u>Example 3</u>

In this Example, the Delink (as described in Example 1) is admixed with fresh rubber, tyre crumbs and glove crumbs to obtain masterbatches containing 90% Delink and 50% Delink. The masterbatches so produced are then incorporated separately into tyre crumbs and glove crumbs in the manner described under Example 1, except that, in the case of the 90% Delink masterbatch, 6.6 parts of the masterbatch is used for 100 parts of vulcanised crumbs and for the 50% masterbatch. 12 parts per 100 of crumbs are employed. The resultant properties are shown in Table 3.

Table 3

| Properties obtained using Delink masterbatches | | | | | | | | |
|---|---|---|---|---|---|---|---|---|
| Type of masterbatch | fresh NR: Delink 10:90 | | NR:Delink 50:50 | | Gloves:Delink 10:90 | | Gloves:Delink 50:50 | |
| Vulcanised scrap: | tyre tread | gloves | tyre tread | gloves | tyre tread | gloves | tyre tread | gloves |
| Tensile strength (MPa) | 11.5 | 17 | 11 | 10 | 10 | 13.5 | 12 | 10.5 |
| Elongation % | 250 | 860 | 250 | 610 | 250 | 780 | 320 | 600 |
| Elongation set % | 5 | 10 | 6 | 15 | 10 | 10 | 6 | 15 |
| Relative concentration of chains, $V_{rel} \times 10^4$ (mole/cm$^3$) | 1.3 | 0.7 | 1.3 | 0.6 | 1.2 | 0.6 | 1.3 | 0.6 |

The above examples are illustrative of the versatility and effectiveness of the process of the present invention to provide recycled rubber compounds from used natural rubber, synthetic rubber vulcanisates and combinations of natural rubber and synthetic rubber vulcanisates.

The resultant reclaimed rubber compounds display satisfactory level of physical and dynamic characteristics. Such compounds can be directly used in moulded goods or in admixture with fresh compounds. Examples of such goods which have been made using reclaimed elastomer in conventional methods of moulding and vulcanisation are tyres, mats, carpet underlays, electrical insulation layers, industrial tyres, tubings and retreads.

The master batching process can be further refined with use of styrene butadiene rubber in place of natural rubber. With careful control of the Delink incorporation process, the milling process and temperature during mastication, the resultant physical and dynamic characteristics of the final reclaimed compound from tyre and glove wastes can be further enhanced.

The following examples illustrate some cases where MBT is replaced with other accelerators.

Example 4

The following materials are mixed in the given proportions:-

| 1. | Benzothiazyl disulphide (MBTS) | 27.8 |
| 2. | Zinc Diethyldithiocarbamate (ZDEC) | 7.6 |
| 3. | Stearic acid | 5.1 |
| 4. | Zinc oxide | 2.5 |

Then 10 parts of this Delink mix are added to 100 parts of tyre crumbs and 12.5 parts of raw natural rubber as described in Example 1. The relevant physical properties of the mix are shown in Table 4 below.

Table 4

| Properties of MBTS mix using raw natural rubber | |
| --- | --- |
| Tensile strength (MPa) | 10.00 |
| Elongation at break (5) | 336 |
| Modulus at 300% elongation (MPa) | 5.6 |

Example 5

The following materials are mixed in the given proportions:-

| 1. | N-cyclohexyl-2-benzothiazole sulphenamide (CBS) | 43.9 |
| 2. | Zinc Diethyldithiocarbamate (ZDEC) | 7.6 |
| 3. | Stearic acid | 5.1 |
| 4. | Zinc oxide | 2.5 |

Then 10 parts of this Delink mix are added to 100 parts of tyre crumbs and 12.5 parts of raw natural rubber as described in Example 1. Some relevant physical properties of the mix are shown in Table 5.

Table 5

| Properties of CBS mix using raw natural rubber | |
| --- | --- |
| Tensile strength (MPa) | 11.1 |
| Elongation at break (%) | 369 |
| Modulus at 300% elongation (MPa) | 7.9 |

Example 6

The following materials are mixed in the given proportions:-

| 1. | N-tert-butyl-2-benzothiazole sulphenamide (TBBS) | 39.8 |
| 2. | Zinc diethyldithiocarbamate (ZDEC) | 7.6 |
| 3. | Stearic acid | 5.1 |
| 4. | Zinc Oxide | 2.5 |

Then 10 parts of this Delink mix are added to 10 parts of tyre crumbs and 12.5 parts of raw natural rubber a described in Example 1. Some relevant physical properties of the mix are shown in Table 6.

Table 6

| Properties of TBBS mix using raw natural rubber and tyre crumbs | |
| --- | --- |
| Tensile strength (MPa) | 12.0 |
| Elongation at break (%) | 353 |
| Modulus at 300% elongation (MPa) | 9.3 |

The invention being thus described it will be obvious that the specific procedures described herein may be varied in many ways. There are described above novel features which the skilled person in the art will appreciate give rise to advantages. It is to be noted that in addition to the use of stearic acid there may be used methacrylic acid. Also in place of diethylene glycol, there may be used propylene glycol, dipropylene glycol or triethylene glycol as well as other suitable diols which can be identified by simple experimentation.

For example, the ingredients of the "paste" of Example 1 may be varied by plus or minus 20%, preferably by plus or minus 10%. Accordingly, the delinking composition may comprise the a) ingredient such a ZDMC in the range of 4.8 to 7.2 parts by weight and the (b) ingredient such as MTB in the range of 16 to 24 parts by weight. Preferably, there is also present in the delinking composition stearic acid an zinc oxide both in the range 1.6 to 2.4 parts by weight. Further sulphur may be present in the range 1.2 to 1.8 parts by weight and a diol such as diethylene glycol may be present in the range 9.6 to 14.4 parts by weight.

It is to be noted that the invention also includes compositions as described above and these may being the form of pastes or masterbatches.

## Claims

1. A process for reclaiming elastomeric material from elemental sulphur-cured elastomeric material, which does not use hexamethylene tetramine, which process comprises treating the said sulphur-cured elastomeric material which has a vulcanised network with one or more rubber accelerators from the following class (A) of accelerators:

   (A) zine salts of thiocarbamates;
   together with one or more rubber accelerators from the following class (B) of accelerators:

   (B) 2-mercaptobenzothiazole or derivatives thereof, thiurams, guanidines, 4,4'-dithiomorpholine and sulphenamides,

   wherein said combination of accelerators initiate the delinking reaction at temperatures below 70°C and there is employed as activator for said reaction zinc oxide and stearic acid, whereby the vulcanised network is opened up or delinked to provide a curable reclaimed elastomeric material.

2. A process according to claim 1, wherein:-

   (a) the zinc salt of thiocarbamate is zinc dimethyldithiocarbamate, zinc diethyldithiocarbamate, zinc dipropyldithiocarbamate, zinc dibutyldithiocarbamate or zinc dibenzyldithiocarbamate;

   (b) the 2-mercaptobenzothiazole or derivative thereof is zinc mercaptobenzothiazole or benzothiazyl disulphide;

   (c) the sulphenamide is N-cyclohexyl 2-benzothiazolesulphenamide or N tertbutyl-2-benzothiazole sulphenamide.

   (d) the thiuram is tetraethylthiuram disulphide, tetramethylthiuram disulphide or tetrabenzylthiuram disulphide.

3. A process according to claim 1 wherein accelerators (A) and (B) comprise a compound from each of the following two classes of accelerators:-

   (A) zinc dimethyldithiocarbamate, zinc diethyldithiocarbamate, zinc dipropyldithiocarbamate, zinc dibutyldithiocarbamate or zinc dibenzyldithiocarbamate, together with

   (B) 2-mercaptobenzothiazole, zinc mercaptobenzothiazole or benzothiazyl disulphide.

4. A process according to claim 3 wherein the two accelerators (A to B) are in the respective molar proportion within the range of 1:1 to 1:12.

5. A process according to any one of the preceding claims wherein a masterbatch comprising a mixture of the rubber accelerators and activator and an elastomeric material is used with the ratio of accelerator plus activator to elastomeric material being in the range of 40:60 to 90:10 on a weight basis.

6. A process according to any one of the preceding claims, wherein the accelerator plus activator mixture are mixed with the said elastomeric material in the respective ratio of about 6 parts of the said mixture per 100 parts of the elastomeric material, on a weight basis.

7. A process according to claim 6, wherein the masterbatch is used and the proportion of the masterbatch to elastomeric material is adjusted accordingly to achieve the ratio of mixture to elastomeric materials of 6:100, on a weight basis.

8. A process according to any one of the preceding claims wherein the sulphur-cured elastomeric material is used material and wherein the elastomeric material was derived from natural rubber, synthetic rubber or blends thereof.

9. A process according to any one of the preceding claims wherein the sulphur-cured elastomer material is in the form of crumbs.

10. A process for producing an article from the reclaimed elastomeric material as produced by the process as claimed in any one of the preceding claims, wherein the reclaimed elastomeric material is processed to form an elastomeric product by fabrication, moulding and/or vulcanisation.

11. A process according to claim 10 wherein said articles is a tyre, car mat, carpet underlay, electrical insulation part or layer, industrial tyre, tubing or retread.

12. A composition which is capable of delinking the vulcanised network of sulphur-cured elastomeric material masterbatch form, which comprises an admixture of one or more rubber accelerators from the following class (A) of accelerators:

(A) zinc salts of thiocarbamates; together with one or more rubber accelerators from the following class (B) of accelerators:

(B) 2-mercaptobenzothiazole or derivatives thereof, thiurams, guanidines, 4,4'-dithiomorpholine and sulphenamides,

zinc oxide and stearic acid, as activator, for the combination of (A) and (B) accelerators, and fresh or reclaimed vulcanised rubber, with the ratio of accelerator plus activator to rubber being in the range of 40:60 to 90:10, on a weight basis.

13. A composition according to claim 12 wherein:-

(a) the zinc salt of thiocarbamate is zinc dimethyldithiocarbamate, zinc diethyldithiocarbamate, zinc dipropyldithiocarbamate, zinc dibutyldithiocarbamate or zinc dibenzyldithiocarbamate;

(b) the 2-mercaptobenzothiazole or derivative thereof is zinc mercaptobenzothiazole or benzothiazyl disulphide;

(c) the sulphenamide is N-cyclohexyl 2-benzothiazolesulphenamide or N-tertbutyl-2-benzothiazole sulphenamide;

(d) the thiuram is tetraethylthiuram disulphide, tetramethylthiuram disulphide or tetrabenzylthiuram disulphide.

14. A composition according to claim 12 wherein accelerators (A) and (B) comprise a compound from each of the following two classes of accelerators:-

(A) zine dimethyldithiocarbamate, zinc diethyldithiocarbamate, zinc dipropyldithiocarbamate, zinc dibutyldithiocarbamate or zinc dibenzyldithiocarbamate, together with

(B) 2-mercaptobenzothiazole, zinc mercaptobenzothiazole or benxothiazyl disulphide.

15. A composition according to any one of claims 12 to 14 wherein the two accelerators (A) and (B) are in the respective molar proportion within the range of 1:1 to 1:12.

16. A composition as claimed in any one of claims 12 to 15, wherein the rubber is fresh rubber or crumbs from a vulcanised product.

17. Use of a composition as defined in any one of claims 12 to 16 for the delinking of the vulcanised network of sulphur-cured elastomeric material.

**Patentansprüche**

1. Verfahren zur Rückgewinnung elastomeren Materials aus mit elementarem Schwefel gehärteten elastomerem Material, wobei Hexamethylentetramin nicht verwendet wird, wobei das Verfahren das Behandeln des Schwefel-gehärteten elastomeren Materials, das ein vulkanisiertes Netzwerk aufweist, mit einem oder mehreren Kautschuk-Beschleunigern aus der folgenden Klasse (A) von Beschleunigern umfasst:

   (A) Zinksalze von Thiocarbamaten;
   zusammen mit einem oder mehreren Kautschuk-Beschleunigern aus der folgenden Klasse (B) von Beschleunigern:

   (B) 2-Mercaptobenzothiazol oder Derivaten davon, Thiuramen, Guanidinen, 4,4'-Dithiomorpholin und Sulphenamiden,

   wobei die Kombination von Beschleunigern die Enkopplungsreaktion (delinking reaction) bei Temperaturen unter 70°C initiiert und als Aktivator für die Reaktion Zinkoxid und Stearinsäure verwendet wird, wodurch das vulkanisierte Netzwerk geöffnet oder entkoppelt (delinked) wird, um ein härtbares, rückgewonnenes elastomeres Material zu liefern.

2. Verfahren nach Anspruch 1, wobei:

   a) das Zinksalz von Thiocarbamat Zink-Dimethyldithiocarbamat, Zink-Diethyldithiocarbamat, Zink-Dipropyldithiocarbamat, Zink-Dibutyldithiocarbamat oder Zink-Dibenzyldithiocarbamat ist;

   b) das 2-Mercaptobenzothiazol oder Derivat davon Zink-Mercaptobenzothiazol oder Benzothiazyldisulfid ist;

   c) das Sulphenamid N-Cyclohexyl-2-Benzothiazolsulphenamid oder N-tert-Butyl-2-Benzothiazolsulphenamid ist;

   d) das Thiuram Tetraethylthiuramdisulfid, Tetramethylthiuramdisulfid oder Tetrabenzylthiuramdisulfid ist.

3. Verfahren nach Anspruch 1, wobei die Beschleuniger (A) und (B) eine Verbindung aus jeder der folgenden zwei Klassen von Beschleunigern umfassen:

   (A) Zink-Dimethyldithiocarbamat, Zink-Diethyldithiocarbamat, Zink-Dipropyldithiocarbamat, Zink-Dibutyldithiocarbamat oder Zink-Dibenzyldithiocarbamat, zusammen mit

   (B) 2-Mercaptobenzothiazol, Zink-Mercaptobenzothiazol oder Benzothiazyldisulfid.

4. Verfahren nach Anspruch 3, wobei die zwei Beschleuniger (A zu B) im molaren Verhältnis im Bereich von 1:1 bis 1:12 vorliegen.

5. Verfahren nach einem der vorhergehenden Ansprüche, wobei eine Grundmischung umfassend ein Gemisch aus den Kautschuk-Beschleunigern und Aktivator und ein elastomeres Material verwendet wird, wobei das Verhältnis von Beschleuniger plus Aktivator zu elastomerem Material, im Bereich von 40:60 bis 90:10 bezogen auf Gewicht liegt.

6. Verfahren nach einem der vorhergehenden Ansprüche, wobei das Beschleunigerplus Aktivator-Gemisch mit dem elastomeren Material im Verhältnis von etwa 6 Teilen des Gemisches pro 100 Teilen des elastomeren Materials, bezogen auf Gewicht, gemischt wird.

7. Verfahren nach Anspruch 6, wobei die Grundmischung verwendet wird und der Anteil von Grundmischung zu elastomerem Material entsprechend eingestellt wird, um das Verhältnis von Gemisch zu elastomerem Material von 6:100, bezogen auf Gewicht, zu erreichen.

8. Verfahren nach einem der vorhergehenden Ansprüche, wobei das Schwefelgehärtete elastomere Material gebrauchtes Material ist und wobei das elastomere Material von Natur-Kautschuk, Synthese-Kautschuk oder Gemischen davon abgeleitet ist.

9. Verfahren nach einem der vorhergehenden Ansprüche, wobei das Schwefelgehärtete elastomere Material in Form von Schnitzeln vorliegt.

10. Verfahren zur Herstellung eines Gegenstandes aus dem rückgewonnenen, elastomeren Material, wie durch das Verfahren nach einem der vorhergehenden Ansprüche hergestellt, wobei das rückgewonnene elastomere Material verarbeitet wird, um ein elastomeres Produkt durch Fertigung, Formen und/oder Vulkanisation zu bilden.

11. Verfahren nach Anspruch 10, wobei der Gegenstand ein Reifen, eine Automatte, eine Teppichunterlage, ein elektrisches Isolierteil oder eine Isolierschicht, ein technischer Reifen, ein Schlauch oder ein laufflächenerneuerter Reifen ist.

12. Zusammensetzung in Grundmischungsform, die in der Lage ist, das vulkanisierte Netzwerk eines Schwefel-gehärteten elastomeren Materials zu entkoppeln (delinking), umfassend eine Beimischung eines oder mehrerer Kautschuk-Beschleuniger aus der folgenden Klasse (A) von Beschleunigern:

(A) Zinksalze von Thiocarbamaten;
zusammen mit einem oder mehreren Kautschuk-Beschleunigern aus der folgenden Klasse (B) von Beschleunigern:
(B) 2-Mercaptobenzothiazol oder Derivate davon, Thiuramen, Guanidinen, 4,4' -Dithiomorpholin und Sulphenamiden,
Zinkoxid und Stearinsäure als Aktivator, zur Kombination der Beschleuniger (A) und (B) und frischem oder rückgewonnenem vulkanisierten Kautschuk,

wobei das Verhältnis von Beschleuniger plus Aktivator zu Kautschuk im Bereich von 40:60 bis 90:10 bezogen auf Gewicht liegt.

13. Zusammensetzung nach Anspruch 12, wobei:

a) das Zinksalz von Thiocarbamat Zink-Dimethyldithiocarbamat, Zink-Diethyldithiocarbamat, Zink-Dipropyldithiocarbamat, Zink-Dibutyldithiocarbamat oder Zink-Dibenzyldithiocarbamat ist;

b) das 2-Mercaptobenzothiazol oder Derivat davon Zink-Mercaptobenzothiazol oder Benzothiazyldisulfid ist;

c) das Sulphenamid N-Cyclohexyl-2-Benzothiazolsulphenamid oder N-tert-Butyl-2-Benzothiazolsulphenamid ist;

d) das Thiuram Tetraethylthiuramdisulfid, Tetramethylthiuramdisulfid oder Tetrabenzylthiuramdisulfid ist.

14. Zusammensetzung nach Anspruch 12, wobei die Beschleuniger (A) und (B) eine Verbindung aus jeder der folgenden zwei Klassen von Beschleunigern umfassen:

(A) Zink-Dimethyldithiocarbamat, Zink-Diethyldithiocarbamat, Zink-Dipropyldithiocarbamat, Zink-Dibutyldithiocarbamat oder Zink-Dibenzyldithiocarbamat, zusammen mit

(B) 2-Mercaptobenzothiazol, Zink-Mercaptobenzothiazol oder Benzothiazyldisulfid.

15. Zusammensetzung nach einem der Ansprüche 12 bis 14, wobei die zwei Beschleuniger (A) und (B) im molaren Verhältnis im Bereich von 1:1 bis 1:12 vorliegen.

16. Zusammensetzung nach einem der Ansprüche 12 bis 15, wobei der Kautschuk frischer Kautschuk oder Schnitzel aus einem vulkanisierten Produkt ist.

17. Verwendung einer Zusammensetzung wie definiert in einem der Ansprüche 12 bis 16 zum Entkoppeln des vulkanisierten Netzwerks von Schwefel-gehärteten elastomerem Material.

## Revendications

1. Procédé pour régénérer une matière élastomère à partir d'une matière élastomère vulcanisée par du soufre élémentaire, qui n'utilise pas des hexaméthylène-tétramines, procédé qui comprend le traitement de ladite matière élastomère vulcanisée par le soufre, qui présente un réseau vulcanisé, avec un ou plusieurs accélérateurs pour caoutchoucs choisis dans la catégorie (A) suivante d'accélérateurs :

   (A) des sels de zinc de thiocarbamates ;
   conjointement avec un ou plusieurs accélérateurs pour caoutchoucs choisis dans la catégorie (B) suivante d'accélérateurs :
   (B) le 2-mercaptobenzothiazole ou ses dérivés, des thiurames, des guanidines, la 4,4'-dithiomorpholine et les sulfénamides,

   dans lequel ladite association d'accélérateurs déclenche la réaction de déréticulation à des températures inférieures à 70°C et on utilise comme activateur pour ladite réaction de l'oxyde de zinc et de l'acide stéarique, le réseau vulcanisé étant ainsi ouvert ou déréticulé pour produire une matière élastomère régénérée vulcanisable.

2. Procédé suivant la revendication 1, dans lequel :

   (a) le sel de zinc de thiocarbamate consiste en diméthyldithiocarbamate de zinc, diéthyldithiocarbamate de zinc, dipropyldithiocarbamate de zinc, dibutyldithiocarbamate de zinc ou dibenzyldithiocarbamate de zinc ;
   (b) le 2-mercaptobenzothiazole ou son dérivé consistant en zinc-mercaptobenzothiazole ou disulfure de benzothiazyle ;
   (c) le sulfénamide consiste en N-cyclohexyl-2-benzothiazolesulfénamide ou N-tertio-butyl-2-benzothiazolesulfénamide ;
   (d) le thiurame consiste en disulfure de tétraéthylthiurame, disulfure de tétraméthylthiurame ou disulfure de tétrabenzylthiurame.

3. Procédé suivant la revendication 1, dans lequel les accélérateurs (A) et (B) comprennent un composé choisi dans chacune des deux catégories suivantes d'accélérateurs :

   (A) diméthyldithiocarbamate de zinc, diéthyldithiocarbamate de zinc, dipropyldithiocarbamate de zinc, dibutyldithiocarbamate de zinc, dibenzyldithiocarbamate de zinc, conjointement avec
   (B) 2-mercaptobenzothiazole, zinc-mercaptobenzothiazole, disulfure de benzothiazyle.

4. Procédé suivant la revendication 3, dans lequel les deux accélérateurs (A et B) sont présents en des proportions molaires respectives comprises dans l'intervalle de 1:1 à 1:12.

5. Procédé suivant l'une quelconque des revendications précédentes, dans lequel un mélange-maître comprenant un mélange des accélérateurs pour caoutchoucs et d'un activateur et une matière élastomère est utilisé, le rapport de l'accélérateur plus l'activateur à la matière élastomère étant compris dans l'intervalle de 40:60 à 90:10 sur base pondérale.

6. Procédé suivant l'une quelconque des revendications précédentes, dans lequel le mélange accélérateur plus activateur est mélangé à la matière élastomère en un rapport, respectivement, d'environ 6 parties dudit mélange pour 100 parties de la matière élastomère, sur base pondérale.

7. Procédé suivant la revendication 6, dans lequel le mélange-maître est utilisé et la proportion du mélange-maître par rapport à la matière élastomère est ajustée en conséquence pour parvenir à un rapport du mélange aux matières élastomères de 6:100, sur base pondérale.

8. Procédé suivant l'une quelconque des revendications précédentes, dans lequel la matière élastomère vulcanisée par le soufre est la matière utilisée et la matière élastomère est dérivée du caoutchouc naturel, d'un caoutchouc synthétique ou de leurs mélanges.

9. Procédé suivant l'une quelconque des revendications précédentes, dans lequel la matière élastomère vulcanisée par le soufre est sous forme de fragments.

10. Procédé pour la production d'un article à partir de la matière élastomère régénérée produite par le procédé suivant l'une quelconque des revendications précédentes, dans lequel la matière élastomère régénérée est traitée pour former un produit élastomère par fabrication, moulage et/ou vulcanisation.

11. Procédé suivant la revendication 10, dans lequel l'article consiste en un bandage pneumatique, un tapis de sol d'automobile, une sous-couche de tapis, une pièce ou couche d'isolation électrique, un bandage industriel, un tube ou un élément de rechapage.

12. Composition qui est capable de déréticuler le réseau vulcanisé d'un mélange-maître à base de matière élastomère vulcanisée par le soufre, qui comprend un mélange d'un ou de plusieurs accélérateurs pour caoutchouc choisis dans la catégorie (A) suivante d'accélérateurs ;

    (A) des sels de zinc de thiocarbamates ; conjointement avec un ou plusieurs accélérateurs pour caoutchouc choisis dans la catégorie (B) suivante d'accélérateurs :
    (B) le 2-mercaptobenzothiazole ou ses dérivés, des thiurames, des guanidines, la 4,4'-dithiomorpholine et les sulfénamides,

    de l'oxyde de zinc et de l'acide stéarique, comme activateur, pour l'association des accélérateurs (A) et (B), et du caoutchouc vulcanisé frais ou régénéré, le rapport de l'accélérateur plus activateur au caoutchouc étant compris dans l'intervalle de 40:60 à 90:10, sur base pondérale.

13. Composition suivant la revendication 12, dans laquelle :

    (a) le sel de zinc de thiocarbamate consiste en diméthyldithiocarbamate de zinc, diéthyldithiocarbamate de zinc, dipropyldithiocarbamate de zinc, dibutyldithiocarbamate de zinc ou dibenzyldithiocarbamate de zinc ;
    (b) le 2-mercaptobenzothiazole ou son dérivé consiste en zinc-mercaptobenzothiazole ou disulfure de benzothiazyle ;
    (c) le sulfénamide consiste en N-cyclohexyl-2-benzothiazolesulfénamide ou N-tertio-butyl-2-benzothiazolesulfénamide ;
    (d) le thiurame consiste en disulfure de tétraéthylthiurame, disulfure de tétraméthylthiurame ou disulfure de tétrabenzylthiurame.

14. Composition suivant la revendication 12, dans laquelle les accélérateurs (A) et (B) comprennent un composé de chacune des deux catégories suivantes d'accélérateurs :

    (A) diméthyldithiocarbamate de zinc, diéthyldithiocarbamate de zinc, dipropyldithiocarbamate de zinc, dibutyldithiocarbamate de zinc, dibenzyldithiocarbamate de zinc, conjointement avec
    (B) 2-mercaptobenzothiazole, zinc-mercaptobenzothiazole, disulfure de benzothiazyle.

15. Composition suivant l'une quelconque des revendications 12 à 14, dans laquelle les deux accélérateurs (A) et (B) sont présents en des proportions molaires respectives comprises dans l'intervalle de 1:1 à 1:12.

16. Composition suivant l'une quelconque des revendications 12 à 15, dans laquelle le caoutchouc consiste en caoutchouc frais ou fragments d'un produit vulcanisé.

17. Utilisation d'une composition répondant à la définition suivant l'une quelconque des revendications 12 à 16 pour la déréticulation du réseau vulcanisé d'une matière élastomère vulcanisée par le soufre.